# FASCICULE DE BREVET EUROPEEN

(11) **EP 0 782 240 B1**
(45) Date de publication et mention de la délivrance du brevet: **31.03.1999**
(21) Numéro de dépôt: 96402866.6
(22) Date de dépôt: 23.12.1996
(51) Int. Cl.: H02K 5/10

(54) **Machine électrique tournante avec mise à l'air**
Rotierende elektrische Entlüftungsmaschine
Rotating electric venting machine

(30) Priorité: 27.12.1995 FR 9515555
(43) Date de publication de la demande: 02.07.1997
(73) Titulaire: VALEO SYSTEMES D'ESSUYAGE, 78321 La Verrière (FR)
(72) Inventeur: Vacca, Frédéric, 78910 Behoust (FR)
(74) Mandataire: Le Forestier, Eric

(56) Documents cités:
- DE-B- 1 265 280

## Description

L'invention concerne les machines électriques tournantes et, en particulier les moteurs à courant continu pour ventilateur de véhicule automobile.

Le document US-5 185 544 décrit un moteur électrique pour véhicule dont le carter est muni d'un conduit externe communiquant avec l'intérieur du moteur. Ce conduit permet une circulation d'air entre l'extérieur et l'intérieur du carter, ce qui contribue à rendre la pression intérieure égale à la pression extérieure ambiante et à évacuer la condensation. Pour rendre le moteur étanche aux projections d'eau, la portion d'extrémité du conduit est orientée vers le bas et présente intérieurement des ailettes formant des chicanes.

Ce dispositif présente deux inconvénients principaux. En premier lieu, ce conduit constitue une pièce rapportée, ce qui allonge la fabrication du moteur. En second lieu, ce conduit s'étend à l'extérieur du moteur et augmente son encombrement, ce qui nuit à certaines applications, par exemple le montage du moteur sur un véhicule.

Un but de l'invention est de pallier ces inconvénients en fournissant une machine électrique tournante permettant une circulation d'air entre l'extérieur et l'intérieur du carter mais ne présentant pas ces inconvénients.

En vue de la réalisation de ce but, on prévoit selon l'invention une machine électrique tournante comportant une carcasse présentant une face interne cylindrique et un flasque d'obturation fixé à la carcasse, comportant en outre un cordon circulaire de joint d'étanchéité s'étendant entre la carcasse et le flasque par référence à une direction parallèle à un axe de la face cylindrique, ce cordon présentant une ouverture en ayant deux extrémités disposées à distance l'une de l'autre, le flasque comportant un muret adjacent aux extrémités du cordon et s'étendant en regard et à distance de la face cylindrique de la carcasse par référence à une direction radiale à l'axe.

A travers l'ouverture du joint, il s'opère une circulation d'air entre l'extérieur et l'intérieur du carter. Le muret et la paroi de carcasse en regard délimitent un espace qui constitue une chicane avec l'ouverture du cordon. Cette chicane réduit le risque d'intrusion de projections d'eau dans la machine par l'ouverture du cordon.

La chicane ainsi réalisée ne nécessite pas le montage d'une pièce supplémentaire et n'augmente pas l'encombrement de la machine.

Avantageusement, la machine sera utilisée dans une position telle que l'ouverture du joint est disposée en partie basse de la machine, l'arbre de la machine étant horizontal.

D'autres avantages de l'invention apparaîtront encore à la lecture de la description qui va suivre d'un mode préféré de réalisation donné à titre d'exemple non limitatif. Aux dessins annexés :
- la figure 1 est une vue en coupe axiale d'un moteur selon l'invention ;
- la figure 2 est une vue en perspective du flasque du moteur de la figure 1 ;
- la figure 3 est une vue partielle en plan du flasque de la figure 2 ; et
- la figure 4 est une vue en coupe selon la ligne IV-IV du flasque de la figure 3, montrant le flasque et la carcasse assemblés.

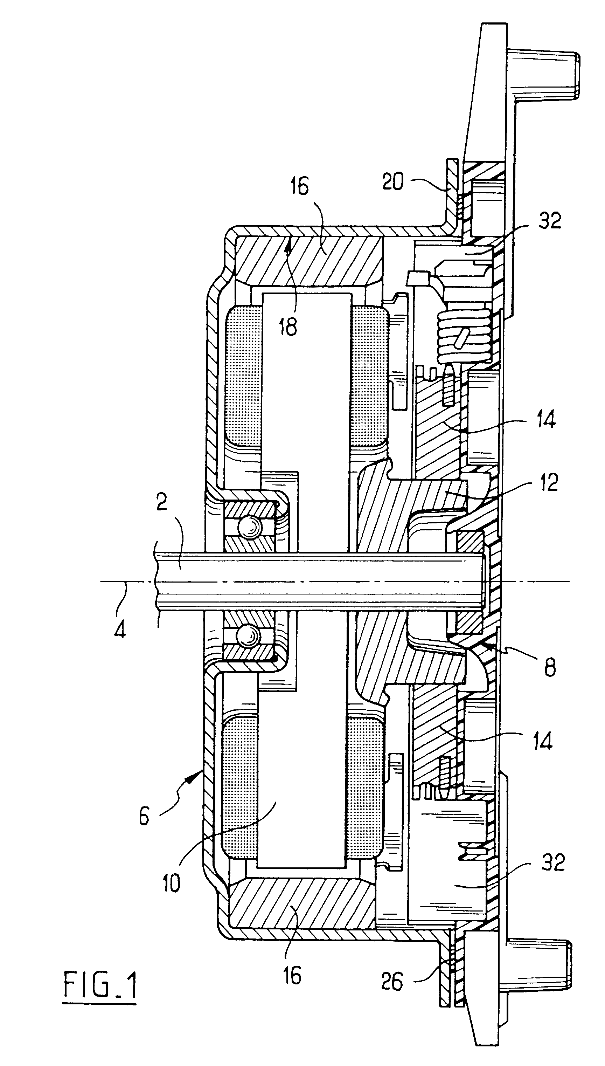

La machine représentée à la figure 1 est un moteur à courant continu de ventilateur de véhicule automobile. Il comporte un arbre 2 d'axe 4 et un carter constitué d'une carcasse 6 et d'un flasque 8. L'arbre 2 porte un induit 10 et un collecteur 12 disposé en regard du flasque. Le flasque porte quatre balais 14 en contact avec le collecteur. L'induit comporte des aimants permanents ferrites 16 fixés à la carcasse.

La carcasse comporte une paroi cylindrique d'axe 4 ayant des faces interne 18 et externe cylindriques. Elle est munie d'un fond à une extrémité de la carcasse et d'une bordure 20 à une autre extrémité de la carcasse opposée au fond. La bordure s'étend vers l'extérieur de la paroi cylindrique dans un plan perpendiculaire à l'axe 4.

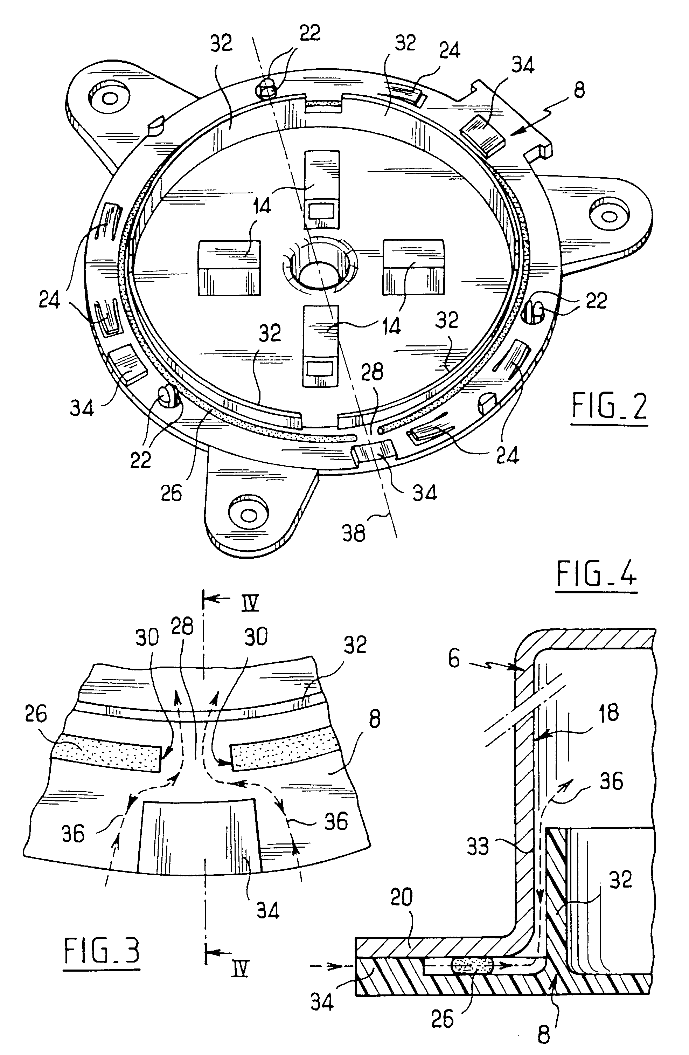

En référence à la figure 2, le flasque 8 a une forme générale de disque et est réalisé en matière plastique moulée. Il est fixé à la bordure 20 parallèlement à celle-ci, pour obturer la carcasse. En vue de cette fixation, le flasque comporte des ergots 22 s'étendant dos à dos par paires dans des logements de la paroi du flasque et dépassant de la surface du flasque en direction de la bordure 20. Ces ergots traversent des orifices de la bordure et viennent en prise sur le bord de ces orifices pour retenir la carcasse à l'encontre de son éloignement relatif du flasque suivant la direction axiale. Le flasque comporte en outre des languettes de flexion 24 inclinées par rapport à la paroi du flasque et sollicitant la bordure 20 dans le sens de son éloignement relatif suivant la direction axiale, rattrapant ainsi le jeu axial généré par les ergots. Les ergots et les languettes sont venus de moulage.

En référence aux figures 2, 3 et 4, le moteur comporte en outre un cordon 26 de joint d'étanchéité de forme circulaire. Ce cordon s'étend entre le flasque et la bordure par référence à une direction parallèle à l'axe 4 de la face interne cylindrique, et a été représenté sur le flasque sur la figure 2. Ce cordon est disposé suivant un cercle non fermé et présente une ouverture 28 délimitée par deux extrémités 30 du cordon disposées à distance et en regard l'une de l'autre.

Dans cette description, on appelle r le rayon de la face interne cylindrique 18 de la carcasse. La distance entre les deux extrémités 30 du cordon est comprise avantageusement entre 0,06 r et 0,6 r, et préférentiellement entre 0,1 r et 0,13 r.

Le flasque 8 comporte quatre tronçons 32 de couronne cylindrique non-jointifs disposés pour former une pseudo-couronne d'axe 4 et présentant un rayon externe légèrement inférieur au rayon r de la face interne 18 de la carcasse. Les tronçons de couronne 32 s'étendent en saillie de la face interne du flasque en direction de la carcasse. Lorsque le flasque est fixé à la carcasse, les tronçons de couronne sont disposés en regard et à distance de la face interne 18 de la carcasse par référence à la direction radiale à l'axe 4, un court espace 33 étant ménagé entre les tronçons de couronne et cette face. La distance entre chaque tronçon de couronne et la face interne cylindrique de la carcasse est comprise avantageusement entre 0,002 r et 0,05 r, et préférentiellement entre 0,008 r et 0,012 r. L'un des tronçons 32 est adjacent aux extrémités 30 et forme un muret s'étendant en regard de l'ouverture 28 du cordon et à distance de celle-ci.

Le flasque présente des reliefs 34 répartis en périphérie du cordon 26, et constitués par des surépaisseurs venues de moulage et formant des cales ayant une face plane en contact continu avec la bordure 20. Les cales ont une forme générale rectangulaire en plan. L'épaisseur de ces cales définit la distance séparant le flasque et la bordure. Cette épaisseur est comprise avantageusement entre 0,002 r et 0,05 r, et préférentiellement entre 0,008 r et 0,012 r. L'une de ces cales 34 s'étend en regard de l'ouverture 28 du cordon et à distance de celle-ci, du côté du cordon opposé au tronçon de couronne 32 précité. Cette cale s'étend continûment au contact de la bordure et du flasque dont elle fait partie, d'une extrémité 30 du cordon à l'autre, en dépassant ces extrémités comme le montre la figure 3.

Avantageusement, le moteur sera utilisé avec le flasque 8 s'étendant suivant un plan vertical, l'ouverture 28 du cordon se trouvant en partie basse du flasque, un axe vertical 38 du flasque passant par cette ouverture 28 en référence à la figure 2.

Cette structure de carter permet une circulation d'air entre l'extérieur et l'intérieur du carter comme indiqué par les flèches 36 en traits pointillés sur les figures 3 et 4. L'ouverture 28 entre les extrémités 30 du cordon et l'espace 33 entre la carcasse et le tronçon de couronne constituent une première chicane dans un plan axial comme on le voit sur la figure 4. Par ailleurs,la cale 34 en regard du cordon 26 constitue avec l'ouverture 28 une deuxième chicane dans un plan perpendiculaire à l'axe 4, en série avec la première chicane. Ces chicanes limitent l'intrusion de projections d'eau dans le carter.

Par ailleurs, les quatre tronçons 32 facilitent le centrage du flasque lors de sa fixation à la carcasse. Les cales évitent en outre l'écrasement des languettes 24 en cas de choc axial sur le carter.

Le flasque est plein et sans ouverture sur sa paroi perpendiculaire à l'axe 4.

Avantageusement, la circulation d'air s'effectue uniquement par l'ouverture 28 définie par les deux extrémités du cordon 26.

Bien entendu, on pourra apporter à l'invention de nombreuses modifications sans sortir du cadre de celle-ci.

On pourra notamment prévoir au moins deux ouvertures sur le cordon 26, chaque ouverture s'étendant en regard d'un tronçon de couronne.

Les tronçons de couronne pourront constituer une couronne entière continue. On pourra aussi se contenter d'un unique tronçon en regard de l'ouverture 28 du cordon.

Les reliefs 34 pourront s'étendre du même côté du cordon que le tronçon de couronne. Ils pourront être portés par la carcasse.

La machine pourra être un générateur. Elle pourra être à courant alternatif.

## Revendications

1. Machine électrique tournante comportant une carcasse (6) présentant une face interne cylindrique (18) et un flasque d'obturation (8) fixé à la carcasse, caractérisée en ce qu'elle comporte en outre un cordon circulaire (26) de joint d'étanchéité s'étendant entre la carcasse et le flasque par référence à une direction parallèle à un axe (4) de la face cylindrique, ce cordon présentant une ouverture (28) en ayant deux extrémités (30) disposées à distance l'une de l'autre, le flasque comportant un muret (32) adjacent aux extrémités du cordon et s'étendant en regard et à distance de la face cylindrique (18) de la carcasse par référence à une direction radiale à l'axe.

2. Machine électrique tournante selon la revendication 1, caractérisé en ce que le muret est constitué par un tronçon (32) de couronne cylindrique s'étendant coaxialement à la face cylindrique (18) de la carcasse.

3. Machine électrique tournante selon la revendication 1 ou 2, caractérisée en ce que la distance entre les deux extrémités (30) du cordon est comprise entre 0,06 r et 0,6 r, où r est le rayon de la face interne cylindrique (18) de la carcasse.

4. Machine électrique tournante selon l'une des revendications 1 à 3, caractérisée en ce que la distance entre le muret (32) et la face interne cylindrique de la carcasse est comprise entre 0,002 r et 0,05 r, où r est le rayon de la face interne cylindrique de la carcasse.

5. Machine électrique tournante selon l'une des revendications 1 à 4, caractérisée en ce qu'elle présente un relief (34) s'étendant continûment au contact du flasque et de la carcasse, en regard et à distance de l'ouverture (28) du cordon, au moins d'une extrémité à l'autre du cordon.

6. Machine électrique tournante selon la revendication 5, caractérisée en ce que le relief (34) s'étend d'un côté du cordon opposé au muret.

7. Machine électrique tournante selon l'une des revendications 1 à 6, caractérisée en ce que le flasque présente plusieurs tronçons (32) de couronne s'étendant coaxialement à la face cylindrique de la carcasse, dont l'un définit le muret.

8. Machine électrique tournante selon l'une des revendications précédentes, caractérisée en ce qu'il s'agit d'un moteur de ventilateur de véhicule automobile.

## Patentansprüche

1. Rotierende elektrische Maschine, umfassend ein Gestell (6), das eine zylindrische Innenfläche (18) aufweist, und eine am Gestell befestigte Verschlußplatte (8) , **dadurch gekennzeichnet**, daß sie außerdem einen kreisförmigen Dichtungssteg (26) umfaßt, der sich zwischen dem Gestell und der Verschlußplatte, bezogen auf eine zur einer Achse (4) der zylindrischen Fläche parallele Richtung, erstreckt, wobei dieser Steg eine Öffnung (28) mit zwei zueinander beabstandeten Enden (30) aufweist, wobei die Verschlußplatte eine den Enden des Dichtungsstegs benachbarte Leiste (32) umfaßt, die sich gegenüber und in einem Abstand von der zylindrischen Fläche (18) des Gestells, bezogen auf eine zur Achse radiale Richtung, erstreckt.

2. Rotierende elektrische Maschine nach Anspruch 1, **dadurch gekennzeichnet**, daß die Leiste aus einem zylindrischen Kranzteilstück (32) besteht, das sich koaxial zur zylindrischen Fläche (18) des Gestells erstreckt.

3. Rotierende elektrische Maschine nach Anspruch 1 oder 2, **dadurch gekennzeichnet**, daß der Abstand zwischen den beiden Enden (30) des Dichtungsstegs zwischen 0,06 r und 0,6 r enthalten ist, wobei r der Radius der zylindrischen Innenfläche (18) des Gestells ist.

4. Rotierende elektrische Maschine nach einem der Ansprüche 1 bis 3,**dadurch gekennzeichnet**, daß der Abstand zwischen der Leiste (32) und der zylindrischen Innenfläche des Gestells zwischen 0,002 r und 0,05 r enthalten ist, wobei r der Radius der zylindrischen Innenfläche des Gestells ist.

5. Rotierende elektrische Maschine nach einem der Ansprüche 1 bis 4,**dadurch gekennzeichnet**, daß sie einen Vorsprung (34) aufweist, der sich durchgehend in Kontakt mit der Verschlußplatte und dem Gestell gegenüber und in einem Abstand von der Öffnung (28) des Dichtungsstegs, mindestens von einem Ende zum anderen des Dichtungsstegs erstreckt.

6. Rotierende elektrische Maschine nach Anspruch 5, **dadurch gekennzeichnet**, daß sich der Vorsprung (34) auf einer der Leiste gegenüberliegenden Seite des Dichtungsstegs erstreckt.

7. Rotierende elektrische Maschine nach einem der Ansprüche 1 bis 6,**dadurch gekennzeichnet**, daß die Verschlußplatte mehrere Kranzteilstükke (32) aufweist, die sich koaxial zur zylindrischen Fläche des Gestells erstrecken und von denen eines die Leiste definiert.

8. Rotierende elektrische Maschine nach einem der vorangehenden Ansprüche, **dadurch gekennzeichnet**, daß es sich um einen Motor für einen Kraftfahrzeuglüfter handelt.

## Claims

1. Rotary electrical machine having a body (6) with a cylindrical internal face (18) and a closure shield (8) fixed to the body, characterised in that it also has a circular sealing-joint bead (26) extending between the body and the shield with reference to a direction parallel to an axis (4) of the cylindrical face, this bead having an opening (28) whilst having two ends (30) disposed at a distance of each other, the shield having a wall (32) adjacent to the ends of the bead and extending opposite and at a distance from the cylindrical face (18) of the body with reference to a direction radial to the axis.

2. Rotary electrical machine according to Claim 1, characterised in that the wall consists of a portion (32) of a cylindrical annulus extending coaxially with the cylindrical face (18) of the body.

3. Rotary electrical machine according to Claim 1 or 2, characterised in that the distance between the two ends (30) of the bead is between 0.06 r and 0.6 r, where r is the radius of the cylindrical internal face (18) of the body.

4. Rotary electrical machine according to one of Claims 1 to 3, characterised in that the distance between the wall (32) and the cylindrical internal face of the body is between 0.002 r and 0.05 r, where r is the radius of the cylindrical internal face of the body.

5. Rotary electrical machine according to one of Claims 1 to 4, characterised in that it has a relief (34) extending continuously in contact with the shield and the body, opposite and at a distance from the opening (28) in the bead, at least from the end to the other of the bead.

6. Rotary electrical machine according to Claim 5, characterised in that the relief (34) extends on a side of the bead opposite to the wall.

7. Rotary electrical machine according to one of Claims 1 to 6, characterised in that the shield has several portions (32) of an annulus extending coaxially with the cylindrical face of the body, one of which defines the wall.

8. Rotary electrical machine according to one of the preceding claims, characterised in that it is a case of a motor vehicle fan motor.
